# FASCICULE DE BREVET EUROPEEN

(11) **EP 3 080 326 B1**
(45) Date de publication et mention de la délivrance du brevet: **05.01.2022**
(21) Numéro de dépôt: 14824900.6
(22) Date de dépôt: 12.12.2014
(51) Int. Cl.: C23C 8/14, C23C 8/18, C23C 8/02, C23C 8/80, C22C 38/00, F27D 7/06, F28F 21/08, F24S 20/20, F24S 70/30, F24S 70/225

(54) **PROCÉDÉ DE RÉALISATION D'UN ÉLÉMENT ABSORBEUR DE RAYONNEMENTS SOLAIRES POUR CENTRALE SOLAIRE THERMIQUE A CONCENTRATION, ÉLÉMENT ABSORBEUR DE RAYONNEMENTS SOLAIRES**
VERFAHREN ZUR HERSTELLUNG EINES ELEMENTS ZUR ABSORPTION VON SONNENSTRAHLUNG FÜR EIN KONZENTRIERENDES SOLARTHERMISCHES KRAFTWERK, ELEMENT ZUR ABSORPTION VON SONNENSTRAHLUNG
METHOD FOR PRODUCING AN ELEMENT FOR ABSORBING SOLAR RADIATION FOR A CONCENTRATING SOLAR THERMAL POWER PLANT, ELEMENT FOR ABSORBING SOLAR RADIATION

(30) Priorité: 13.12.2013 FR 1302935
(43) Date de publication de la demande: 19.10.2016
(73) Titulaire: Commissariat à l'Énergie Atomique et aux Énergies Alternatives, 75015 Paris (FR); Mannesmann Precision Tubes France, 89600 St-Florentin (FR)
(72) Inventeur: FLEURY, Gatien, F-04800 Gréoux-les-Bains (FR); COUTURIER, Raphaël, F-38360 Sassenage (FR); SICARDY, Olivier, F-38120 Saint-Egrève (FR); MOLLARD, Carole, F-38730 Panissage (FR); BOULAY, Benoit, F-89570 Neuvy Sautour (FR); DUHAMEL, Jean-Marc, F-51300 Vitry-le-François (FR)
(74) Mandataire: Talbot, Alexandre
(86) Numéro de dépôt international: PCT/FR2014/053326
(87) Numéro de publication internationale: WO 2015/087021

(56) Documents cités:
- EP-A1- 0 903 421
- WO-A1-2013/077363
- WO-A2-2012/168577
- JP-A- 2008 223 128
- US-A1- 2007 235 023
- US-A1- 2012 308 772
- CARMEN OSTWALD ET AL: "Initial oxidation and chromium diffusion. I. Effects of surface working on 9-20% Cr steels", CORROSION SCIENCE., vol. 46, no. 5, 1 May 2004 (2004-05-01), pages 1113-1127, XP055693859, GB ISSN: 0010-938X, DOI: 10.1016/j.corsci.2003.09.004

## Description

### Domaine technique de l'invention

L'invention est relative à un élément absorbeur de rayonnements solaires, pour centrale solaire thermique à concentration et à son procédé de réalisation, avec notamment la formation d'un revêtement sélectif sur une surface extérieure d'un substrat en acier.

### État de la technique

Une centrale solaire thermique à concentration, également appelée centrale solaire thermodynamique (CSP pour « Concentrating Solar Power Plant ») est une centrale destinée à concentrer les rayons du soleil, à l'aide de miroirs pour chauffer un fluide caloporteur. Le fluide caloporteur sert alors de source chaude dans un cycle thermodynamique en vue de produire de l'électricité. La concentration des rayonnements solaires permet d'atteindre des températures plus élevées et de bénéficier d'une conversion thermodynamique importante.

Il existe différentes techniques pour concentrer les rayonnements solaires, pour transporter et éventuellement stocker la chaleur et pour convertir la chaleur en électricité. Dans tous les cas, un des éléments essentiels d'une centrale solaire thermique à concentration est l'élément absorbeur de rayonnements solaires qui forme une partie du récepteur.

Afin de maximiser le rendement de l'absorbeur, celui-ci comporte en général un revêtement, appelé revêtement sélectif ou traitement sélectif. Le revêtement sélectif est destiné à permettre une absorption maximale de l'énergie solaire incidente tout en réémettant le moins possible de rayonnements infrarouges (principe du corps noir). En particulier, un tel revêtement sélectif est considéré comme parfait s'il absorbe toutes les longueurs d'ondes inférieures à une longueur d'onde de coupure et réfléchit toutes les longueurs d'ondes supérieures à cette même longueur d'onde de coupure.

À titre d'exemple, la demande internationale WO 2009/051595 propose un revêtement sélectif solaire recouvrant la surface extérieure d'un tube absorbeur de rayonnement solaire, typiquement en acier inoxydable, et comportant un empilement de plusieurs couches ayant chacune une fonction et une épaisseur déterminées par simulation optique. Dans un mode particulier de réalisation, le tube absorbeur de rayonnement solaire est successivement recouvert par une succession de bicouches composés d'une couche en matériau réfléchissant les rayonnements IR et d'une couche en matériau absorbant le rayonnement solaire, suivi par l'application d'une couche antireflet. Le tube absorbeur de rayonnement solaire est, par exemple, en acier inoxydable de structure austénitique, par exemple de type AISI 316, 321, 347 ou 304L.

Le brevet US 4,268,324 et l'article « Influence de l'oxydation et de la rugosité sur les caractéristiques radiatives des aciers inoxydables » de Ph. Demont (Journal de Physique, Colloque C1, Tome 42, 1981) décrivent l'utilisation d'un traitement thermique pour obtenir une couche d'oxyde à la surface de substrats en acier inoxydable tel que AISI 321, 304 et 316. La couche d'oxyde joue le rôle de revêtement sélectif. Les températures utilisées, pour le traitement thermique, sont comprises entre 300°C et 1000°C environ. Le brevet US 4,268,324 précise que la température optimale de formation du revêtement sélectif pour l'acier inoxydable AISI 321 est de 570°C, c'est à cette température que l'absorption de la couche d'oxyde obtenue est la plus élevée, tout en conservant une émissivité relativement faible.

La demande internationale WO 2012/168577 décrit également la formation d'une couche d'oxyde à la surface d'un substrat en acier inoxydable par traitement thermique. Les températures du traitement thermique sont comprises entre 550°C et 650°C.

Le brevet US 4,097,311 décrit la formation d'une couche d'oxyde à la surface d'un substrat en acier inoxydable par trempage dans un bain oxydant à une température comprise entre 70°C à 120°C.

L'ensemble de ces types de revêtements sélectifs ne permet pas de répondre simultanément aux besoins de performance et de tenue dans le temps, notamment sous une atmosphère oxydante. En effet, les revêtements actuellement disponibles commercialement, pour des températures d'utilisation élevées (typiquement supérieures à 400°C), nécessitent souvent l'utilisation d'une enveloppe de protection sous vide, qui d'une part augmente les coûts de fabrication et, d'autre part, pose des problèmes de stabilité dans le temps.

De plus, les substrats ainsi obtenus présentent des risques de rupture par fatigue thermique, qui diminue leur durée de vie. La demande international WO2013/077363 propose un acier ferritique résistant à la chaleur comprenant un matériau de base comprenant, en pourcentage en masse, C : 0,01 à 0,3 %, Si : 0,01 à 2 %, Mn : 0,01 à 2 %, P : au plus 0,10 %,S : au plus 0,03 %, Cr : 7,5 à 14,0 %, Al sol. : au plus 0,3 %, et N : 0,005 à 0,15 %, le reste étant du Fe et des impuretés, et un film d'oxyde qui se forme sur le matériau de base et qui contient 25 à 97% de Fe et 3 à 75% de Cr. Cet acier ferritique résistant à la chaleur est excellent en termes d'absorptivité photosélective et de résistance à l'oxydation.

### Objet de l'invention

L'objet de l'invention tend à proposer un élément absorbeur de rayonnements solaires, pour centrale solaire thermique à concentration, comprenant un revêtement sélectif performant, durable et stable, non seulement pour des températures d'utilisation supérieures à 400°C, mais aussi dans une atmosphère oxydante tel que l'air. L'élément absorbeur doit également présenter de faibles risques de rupture par fatigue thermique.

On tend vers cet objet par les revendications annexées.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :

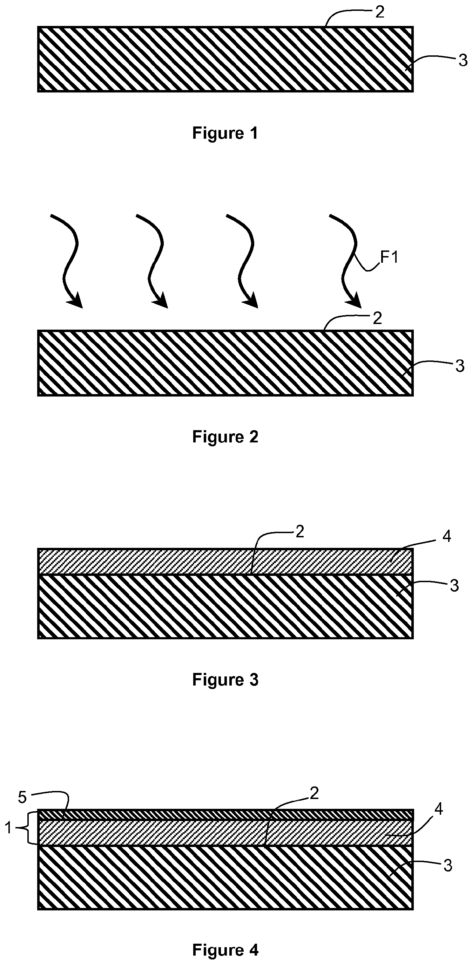

- les figures 1 à 4 représentent schématiquement et en coupe différentes étapes d'un procédé de réalisation d'un élément absorbeur de rayonnement solaire, selon l'invention.

### Description de modes préférentiels de l'invention

Il est proposé de réaliser un élément absorbeur de rayonnements solaires convenant particulièrement aux centrales solaires thermiques à concentration et remédiant aux inconvénients de l'art antérieur.

Comme illustré sur les figures 1 à 4, le procédé de réalisation d'un élément absorbeur de rayonnements solaires, pour centrale solaire thermique à concentration, comprend la formation d'un revêtement sélectif 1 sur une surface extérieure 2 d'un substrat 3 en acier, la formation du revêtement sélectif 1 comportant les étapes successives suivantes :
- fournir un substrat 3 en acier,
- réaliser un traitement thermique (flèches F1 sur la figure 2), de manière à former une couche d'oxyde 4 à la surface du substrat 3.

L'acier entrant dans la composition du substrat, sur lequel est formé le revêtement sélectif, est spécifiquement sélectionné.

Préférentiellement, l'acier est un acier dit « fortement allié », c'est-à-dire qu'il contient un élément d'alliage présent à plus de 5% en poids par rapport au poids total de l'acier.

Par rapport aux aciers inoxydables, les aciers fortement alliés possèdent une meilleure conductivité thermique, un coefficient de dilatation thermique plus faible et de meilleures propriétés mécaniques. Avantageusement, ces propriétés les rendent moins sensibles à la fatigue thermique et permettent d'avoir une meilleure transmission de la chaleur depuis l'extérieur du tube vers le fluide caloporteur.

L'acier a une teneur en chrome comprise entre 6% et 12,5% en poids, préférentiellement, entre 6% et 11,6% en poids, encore plus préférentiellement, entre 6% et 11,5% en poids et encore plus préférentiellement entre 6% et 10,5% en poids.

Par teneur en chrome d'un acier, on entend le pourcentage en poids de chrome, par rapport au poids total des éléments constituant l'acier. Il s'agit de la teneur ou du pourcentage minimum généralement rapporté pour une nuance particulière d'acier.

L'utilisation d'un tel acier permet d'améliorer la conduction de la chaleur par rapport à un acier inoxydable. Avantageusement, ces aciers présentent une dilatation thermique plus faible, ce qui permet de limiter les contraintes thermiques et donc de diminuer la fatigue en rupture.

Par ailleurs, l'acier du substrat 2 peut être, plus spécifiquement, choisi parmi les aciers présentant une teneur en nickel inférieure à 1% en poids, et, de préférence, parmi les aciers présentant une teneur en nickel inférieure à 0,5%. Avantageusement, la présence de nickel dans ces pourcentages permet d'augmenter la résistance mécanique du substrat.

L'acier présente, également, une teneur en aluminium inférieure à 1% en poids. Préférentiellement la teneur en aluminium est inférieure ou égale à 0,05%, et encore plus préférentiellement, inférieure à 0,04%.

Une telle teneur en aluminium améliore, avantageusement, les performances en fluage tout en affinant suffisamment le grain de la matrice. Selon l'invention, le substrat en acier a une teneur en chrome comprise entre 6% et 12,5% en poids, une teneur en carbone comprise entre 0,07% et 0,23%, une teneur en manganèse comprise entre 0,2% et 1,3%, une teneur en molybdène comprise entre 0,2% et 2,3%, une teneur en tungstène comprise entre 0% et 2,5%, une teneur en vanadium comprise entre 0% et 0,4% et une teneur en aluminium inférieure ou égale à 0,05% en poids,

L'acier du substrat 2 est, avantageusement, choisi parmi les aciers désignés par X11CrMo9-1, X10CrMoVNb9-1, X10CrWMoVNb9-2 et X11CrMoWVNb9-1-1 qui correspondent, respectivement, aux aciers définis par 1.7386, 1.4903, 1.4901 et 1.4905 selon le système numérique européen (norme EN 10027-2), et parmi les aciers T91 (K90901), T92 (K02460), T911 (K91061) et le T122 (K91271) des normes ASTM (UNS).

L'acier peut également être choisi parmi les aciers désignés par X20CrMoV11-1, X20CrMoV12-1 et X19CrMoNbVN11-1 qui correspondent, respectivement, aux aciers définis par 1.4922, 1.7175 et 1.4913 selon le système numérique européen DIN (norme EN 10027-2).

Selon un mode préférentiel, la composition de l'acier est donnée dans le tableau ci-dessous :

**Tableau 1**

| (% en poids) | **C** | **Mn** | **Si** | **Cr** | **Mo** | **V** | **w** | **Nb** | **N** | **Al** | **Ti** | **Ni** |
|---|---|---|---|---|---|---|---|---|---|---|---|---|
| Min | 0,07 | 0,2 | 0,1 | 6 | 0,2 | 0 | 0 | 0 | 0 | 0 | 0 | 0 |
| Max | 0,23 | 1,30 | 1 | 11,6 | 2,3 | 0,4 | 2,5 | 0,6 | 0,08 | 0,04 | 0,1 | 0,5 |

Une telle proportion en chrome dans l'acier permet d'obtenir un acier fortement allié. Avantageusement, une telle proportion de chrome permet d'obtenir une couche d'oxyde avec des propriétés optiques, une tenue mécanique et une stabilité dans le temps améliorées.

La présence de carbone, manganèse, molybdène, vanadium et tungstène, dans ces proportions, dans le substrat, permet d'améliorer les propriétés mécaniques de la couche d'oxyde obtenue par oxydation du substrat.

L'acier peut également comporter des impuretés, par exemple, de plomb, d'étain, de soufre, de phosphore, d'arsenic, d'antimoine. Par impureté, on entend un élément présent à moins de 0,1% par rapport au poids total de l'acier.

Le reste des pourcentages en poids correspond au pourcentage en poids de fer. L'alliage contient au moins 50% en poids de fer.

De plus, comme les aciers utilisés présentent une bonne conductivité thermique et un faible coefficient de dilatation, i.e. de l'ordre de 30% inférieur à celui des aciers inoxydables austénitiques, les risques de rupture par fatigue thermique lors de l'utilisation seront ainsi limités.

Les aciers utilisés pour réaliser l'élément absorbeur de rayonnement solaire possèdent une résistance à la corrosion bien supérieure aux alliages faiblement alliés, comportant notamment entre 1 et 5% de chrome, tel que par exemple l'acier 10CrMo9-10 ; les propriétés mécaniques sont en plus aussi nettement améliorées.

Avantageusement, ces alliages sont plus résistants à chaud, ce qui permet de réduire les épaisseurs du substrat utilisé, et de diminuer les gradients thermiques ainsi que les risques de rupture par fatigue thermique.

Le substrat 3 en acier a une épaisseur entre 1mm et 8mm. Selon un mode de réalisation préférentiel, le substrat 3 en acier a une épaisseur comprise entre 1mm et 7mm. Avantageusement, l'utilisation d'acier de faibles épaisseurs, permet de limiter la formation de contraintes résiduelles lors du traitement thermique.

En particulier, le substrat 3 en acier présente une surface extérieure 2 sur laquelle est réalisée le revêtement sélectif. Il peut être de tout type de forme, adapté pour son utilisation comme élément absorbeur de rayonnements solaires sélectif, pour une centrale solaire thermique à concentration (par exemple une centrale solaire de type Fresnel ou cylindro-parabolique).

L'utilisation d'un substrat en acier présentant une teneur en chrome comprise entre 6% et 12,5%, et de préférence, entre 6% et 11,6%, et encore plus préférentiellement, entre 6% et 11,5% en poids permet de former, grâce à un traitement thermique, une couche mince superficielle intrinsèquement sélective, à la surface extérieure dudit substrat. Avantageusement, ceci permet aussi de former une couche d'oxyde stable dans le temps qui ne se desquame pas. La présence du chrome contribue aux bonnes propriétés mécaniques en température.

Par couche mince superficielle intrinsèquement sélective, on entend une couche mince superficielle qui, de part sa nature intrinsèque, est capable d'absorber un maximum d'énergie solaire incidente et de réémettre un minimum de rayonnement infrarouge. Par absorber un maximum d'énergie, on entend que la couche mince superficielle permet d'absorber au moins 75% du rayonnement solaire. Par réémettre un minimum de rayonnement infrarouge, on entend que l'émissivité de la couche mince superficielle est inférieure à 25%.

Avantageusement, la température du traitement thermique est supérieure à la température de fonctionnement de l'élément absorbeur, i.e. la température de traitement thermique est supérieure à 400°C.

Le revêtement sélectif 1, aussi appelé traitement sélectif, ainsi obtenu est stable sous air, pour des températures d'utilisation supérieures à 400°C et présente une longue durée de vie, pendant de nombreuses années, par exemple de l'ordre de 20 ans.

Selon l'invention, le traitement thermique est réalisé à une température comprise entre 400°C et 900°C. Préférentiellement, le traitement thermique est réalisé à une température comprise entre 500°C et 800°C.

Dans la mesure où la couche, responsable des bonnes propriétés optiques de la surface, a été formée à plus haute température que sa température d'utilisation, l'oxyde ainsi obtenu, qui contient principalement de l'oxygène, du fer et du chrome, est stable au cours de son utilisation, y compris pour un usage en atmosphère oxydante lors de cycles thermiques.

Par exemple, le traitement thermique est réalisé en utilisant une vitesse de montée en température de 5°C/min à 1°C/sec, préférentiellement de 0,3°C/s à 0,5°C/s.

La durée du palier en température lors du traitement thermique est comprise entre 5 minutes et 240 minutes, en fonction de la température choisie et de la rampe de température utilisée.

L'étape de traitement thermique permet de former, à l'interface avec la surface extérieure 2 du substrat 3, une couche mince superficielle 1. Cette opération de traitement thermique est symbolisée par les flèches F1 sur la figure 2.

L'étape de traitement thermique est réalisée sous atmosphère oxydante. Par atmosphère oxydante, on entend d'une manière générale de l'air, de l'air enrichi en dioxygène ou encore de l'air enrichi en vapeur d'eau. L'atmosphère oxydante contient au moins 5% en volume d'un précurseur en oxygène, par exemple O₂, H₂O, O₃.

Par atmosphère très faiblement oxydante, on entend une atmosphère à faible taux de CO₂ et très faible taux de O₂.

Préférentiellement, le traitement thermique est réalisé sous air.

La couche mince superficielle 1 est, en particulier, obtenue par oxydation de certains éléments contenus dans l'acier composant le substrat 2. Elle est donc essentiellement composée d'oxyde.

Des mesures réalisées par diffraction des rayons X (DRX) ont notamment mis en évidence que la couche mince superficielle est composée d'oxydes de fer et de chrome. L'oxyde obtenu est de type (Fe,Cr)₂O₃.

La couche d'oxyde est constituée essentiellement de fer, de chrome et d'oxygène.

Par constituée essentiellement, on entend que la couche d'oxyde est formée de fer, de chrome, d'oxygène. La couche d'oxyde peut contenir, éventuellement, des impuretés.

La couche mince superficielle 1 est en contact direct avec le substrat 2 en acier. Cette couche mince superficielle 1 étant formée par oxydation du substrat, elle possède une excellente adhérence comparée notamment à d'autres couches déposées par dépôts en couches minces comme par exemple par dépôt physique en phase vapeur (ou PVD pour l'anglais physical vapor déposition) ou encore par dépôt chimique en phase vapeur (ou CVD pour l'anglais chemical vapor déposition).

L'épaisseur de la couche d'oxyde 4 formée est comprise entre 10nm et 1000nm, et de préférence, entre 20nm et 500nm. Encore plus préférentiellement, l'épaisseur de la couche d'oxyde est comprise entre 50nm et 100nm. Plus l'oxyde est épais, plus l'absorption dans la gamme du rayonnement solaire sera bonne, mais plus l'émissivité du traitement sélectif augmentera dans la gamme des infra-rouges. L'homme du métier choisira donc des épaisseurs dans la gamme précédemment citée.

Selon un mode de réalisation préférentiel, avant ou après l'étape de traitement thermique, un traitement de surface est réalisé sur le substrat 3 de manière à obtenir une rugosité Ra inférieure à 1 µm, préférentiellement inférieure à 0,5 µm, selon la norme NF ISO 4287, pour la surface extérieure 2 du substrat 3.

La rugosité Ra de la surface extérieure 2 du substrat 3, après le traitement thermique, est, préférentiellement, comprise entre 0,05µm et 0,5µm ce qui permet d'obtenir une couche présentant une bonne absorption tout en présentant une faible émissivité. Par bonne absorption, on entend une absorption supérieure à 0,75 dans la gamme des longueur d'onde du rayonnement solaire, et de préférence supérieure à 0,9, et par faible émissivité, une émissivité inférieure à 0,25 et de préférence inférieure à 0,2 dans la gamme des infra-rouge pertinente par rapport à l'application visée.

Plus la rugosité est faible et plus l'émissivité et l'absorption seront faibles. Une rugosité comprise entre 0,05µm et 0,5 µm permet d'obtenir à la fois une faible émissivité et une bonne absorption du rayonnement solaire reçu, tout en étant réalisable d'un point de vue industriel.

Pour la réalisation du revêtement sélectif 1 recouvrant la surface extérieure 2 du substrat 3, ladite surface extérieure 2 est donc, au préalable, polie selon des procédés de polissage classiques ou des procédés particuliers de mise en forme.

Préférentiellement, le traitement de surface est un polissage mécanique ou un polissage électrolytique ou un traitement de surface chimique.

A titre d'exemple, le polissage mécanique peut être réalisé à l'aide d'un papier à polir de taille de grains décroissante (de P220 à P1200) et d'un feutre imbibé d'une suspension de particules diamantées monocristallines ayant typiquement 3 µm de diamètre.

Parmi les procédés de mise en forme, le traitement de surface peut aussi être réalisé par étirage à froid du substrat. L'étirage est une étape qui fait partie du procédé de fabrication des tubes sans soudure. Avantageusement, l'étirage permet, à la fois, de donner au tube ses dimensions finales et, en même temps, structurer la surface du tube de manière à augmenter l'absorption de l'élément absorbeur.

Cette opération de traitement de surface par polissage ou étirage à froid permet, notamment, de maîtriser l'état de rugosité de la surface extérieure 2 du substrat 3, avant l'opération de traitement thermique et elle a, notamment, une influence sur l'émissivité de la surface extérieure 3 dans la gamme des infrarouges.

Comme représenté sur la figure 4, selon un mode de réalisation particulier, le procédé comporte le dépôt d'une couche anti-reflet 5 sur la couche d'oxyde 4 à la surface du substrat 3.

L'ensemble composé de la couche mince superficielle 4 revêtue par la couche antireflet 5, forme alors le revêtement sélectif 1 de l'élément absorbeur de rayonnements solaires.

La couche anti-reflet 5 permet, avantageusement, d'améliorer l'absorption. La couche anti-reflet 5 n'émet pas, ou très peu, dans l'infra-rouge afin de ne pas dégrader les performances du traitement sélectif.

La couche antireflet 5 est, par exemple, une couche en oxyde de silicium SiO₂, en alumine Al₂O₃, en nitrure de silicium, ou en oxyde de titane TiO₂ ou encore une combinaison de ces différentes couches ou produits.

Cette couche aura, avantageusement, un indice de réfraction compris entre celui du substrat et celui de l'air. La couche anti-reflet 5 a, par exemple, un indice de réfraction compris entre 1,5 et 3,5, et de préférence entre 1,5 et 2,5. Avantageusement, elle a un coefficient d'extinction très faible afin d'éviter une augmentation de l'émissivité. Avantageusement, la présence de la couche anti-reflet 5 ne doit pas augmenter de plus de 5% l'émissivité du revêtement sélectif 1 de l'élément absorbeur.

L'épaisseur de la couche anti-reflet 5 est comprise entre 30nm et 250nm, et de préférence entre 50nm et 200nm, afin d'obtenir les meilleures performances. L'épaisseur optimale est déterminée en fonction de la longueur d'onde cible à laquelle le filtre quart d'onde doit être formé. Le filtre quart d'onde permet de former des interférences destructrices et de minimiser la réflexion. Par exemple, la longueur d'onde choisie permettra d'avoir une absorption maximale du rayonnement solaire incident autour de 500nm.

La couche anti-reflet 5 est, par exemple, formée par une technique de dépôt sous vide, telle que le dépôt physique en phase vapeur (pulvérisation cathodique ou évaporation) ou en encore par dépôt chimique en phase vapeur. Selon un mode de réalisation préférentiel, la couche anti-reflet est déposée par dépôt par voie chimique en phase vapeur assisté par plasma ou PACVD pour « Plasma-Assisted Chemical Vapour Déposition ». Le dépôt par PACVD en atmosphère ambiante permet de réaliser une couche anti-reflet 5 à faible coût car ce dépôt ne nécessite pas de travailler sous vide. Par atmosphère ambiante, on entend une pression de l'ordre de 1atm, i.e. de l'ordre de 1013hPa, et une température de l'ordre de 20°C à 25°C.

La technique du PACVD permet notamment de déposer des couches d'oxyde possédant des indices de réfraction faibles, comme des couches en SiO₂ d'indice n=1.5, ou des indices de réfraction élevés comme des couches en TiO₂ d'indice n=2.55. Il est donc aisé, avec cette technique, de réaliser un empilement multi-couches bas coût, chaque couche pouvant avoir un indice de réfraction différent.

Selon un mode de réalisation particulier, plusieurs couches d'indice et d'épaisseur différentes sont disposées à la surface de la couche mince d'oxyde afin de former un empilement permettant de diminuer la réflexion.

À titre d'exemple, des mesures d'absorptance, d'émissivité et de réflectance ont été réalisées sur un élément absorbeur comportant un substrat en acier de désignation numérique 1.4903, aussi désigné, selon les normes des pays par ASTM A-213 T91 ou X10CrMoVNb9-1 (EN 10216-2).

La composition théorique de l'acier est indiquée dans le tableau suivant :

**Tableau 2**

| (% en poids) | **C** | **Mn** | **Si** | **Cr** | **Mo** | **V** | **Ni** |
|---|---|---|---|---|---|---|---|
| Théorique | 0,07-0,14 | 0,3-0,6 | 0,2-0,5 | 8-9,5 | 0,85-1,05 | 0,18-0,25 | 0,03-0,07 |

Plusieurs configurations de mesure ont été testées :
- l'échantillon N°1 correspond au substrat T91 soumis à un traitement thermique sous air pendant 1h à 600°C,
- l'échantillon N°2 correspond à l'échantillon N°1 qui a subi, en plus du traitement thermique, une première étape de vieillissement à 350°C pendant 750h et une deuxième étape de vieillissement à 450°C pendant 250h,
- l'échantillon N°3 correspond à l'échantillon N°2 sur lequel a été déposé une couche anti-reflet, c'est-à-dire que l'échantillon N°3 correspond à un substrat T91 soumis à un traitement thermique sous air à 600°C pendant 1h, puis à une première étape de vieillissement à 350°C pendant 750h et à une deuxième étape de vieillissement à 450°C pendant 250h, et sur lequel une couche anti-reflet a finalement été déposée,
- l'échantillon N°4 correspond à l'échantillon N°3 qui a subi après le dépôt de la couche anti-reflet une étape de vieillissement à 350°C pendant 250h,
- l'échantillon N°5 correspond à l'échantillon N°4 qui a subi une étape additionnelle de vieillissement à 450°C pendant 250h.

Les substrats non polis présentent généralement une rugosité Ra supérieure à 1µm. Les substrats polis ont subi un polissage mécanique, permettant d'obtenir une rugosité Ra~0,1µm.

Le traitement thermique est réalisé à une température de 600°C, sous air, pendant 1h. L'opération de traitement thermique provoque la formation, directement à la surface extérieure du substrat, d'une couche mince superficielle oxydée, présentant un caractère intrinsèquement sélectif. La couche d'oxyde obtenue a une épaisseur entre 10nm et 1000nm, et de préférence, entre 20nm et 500nm.

La couche anti-reflet 5 est déposée par PACVD à pression atmosphérique. Elle est en SiO₂ et présente une épaisseur de l'ordre de 80nm.

La réflectivité totale du substrat a été mesurée sur une gamme de longueur d'onde allant de 320nm à 10 000nm.

Ces mesures de réflectivité permettent de calculer les grandeurs d'absorption et d'émissivité, qui sont les propriétés de surface recherchées. Les mesures ont été réalisées dans la gamme du rayonnement visible (0,32µm -2,5µm), grâce à un spectrophotomètre lambda 950 de Perkin Elmer, qui possède une sphère d'intégration de 150 mm de diamètre, revêtue de BaSO₄. Dans la gamme 2,5-10µm, la réflectance est mesurée grâce à un spectrophotomètre Equinox 55, fabriqué par Bruker et qui possède une sphère d'intégration revêtue d'or qui est fortement réflecteur pour ces longueurs d'onde

Les résultats des mesures optiques réalisées sur les échantillons sont répertoriés dans le tableau suivant :

**Tableau 3**

| | N°1 | | N°2 | | N°3 | | N°4 | | N°5 | |
|---|---|---|---|---|---|---|---|---|---|---|
| | non poli | poli | non poli | poli | non poli | poli | non poli | poli | non poli | poli |
| Absorptance | 77 | 72 | 78 | 73 | 85 | 82 | 81 | 81 | 83 | 81 |
| Réflectance | 23 | 28 | 22 | 27 | 15 | 18 | 19 | 19 | 17 | 19 |
| Emissivité à 100°C | 20 | 7 | 23 | 9 | 23 | 9 | 24 | 8 | 24 | 8 |
| Emissivité à 300°C | 24 | 11 | 27 | 12 | 27 | 12 | 28 | 12 | 27 | 11 |
| Emissivité à 450°C | 26 | 12 | 29 | 14 | 30 | 15 | 32 | 15 | 30 | 13 |

La présence de la couche anti-reflet 5, dans le revêtement sélectif recouvrant le substrat 3 en acier, permet d'obtenir un gain de 7 à 9% en absorption sans modifier l'émissivité de la couche anti-reflet.

L'utilisation d'un substrat 3 présentant une rugosité Ra inférieure à 0,4µm permet d'obtenir un traitement sélectif présentant une émissivité significativement inférieure à celle obtenue pour des substrats ayant des rugosités plus élevées, typiquement supérieures à 1µm.

Il a, également, été constaté que ces performances sont stables, même après les étapes de vieillissement de l'absorbeur solaire à 350°C et 450°C.

La couche d'oxyde 4 formée à la surface extérieure 2 du substrat 3 est une couche d'oxyde stable à des températures supérieures à la température d'utilisation de l'élément absorbeur de rayonnements solaires (typiquement supérieure à 400°C) et dans des conditions oxydantes (notamment sous air).

Ainsi, la formation d'une telle couche mince superficielle permet au revêtement sélectif, qui la comprend, d'être performant, durable et stable pour des températures d'utilisation jusqu'à typiquement 500°C, qui est la température classique de fonctionnement des éléments absorbeurs de rayonnements solaires. De plus, la réalisation d'une telle couche mince superficielle est facile à mettre en œuvre et peu onéreuse, puisque le traitement thermique, permettant de réaliser l'oxydation superficielle du substrat, est un traitement simple à mettre en place à l'échelle industrielle.

Les aciers dont la teneur en chrome est inférieure à 11,6% massique voire 11,5% massique ont la réputation de former un oxyde non stable dans le temps. Or, il a été montré que, dans les conditions décrites ci-dessus, l'oxyde formé à la surface du substrat est stable dans les conditions d'utilisation d'une centrale solaire (sous air et à des températures de fonctionnement inférieures à 500°C) et possède de bonnes propriétés optiques.

Avantageusement, des tubes en acier de grandes longueurs seront utilisés afin de limiter le nombre de soudures à réaliser afin d'obtenir un tube de très grande longueur. En effet, les soudures sont plus difficiles à réaliser sur des aciers fortement alliés par rapport à des aciers faiblement alliés ou des aciers inoxydables.

Les substrats en acier, sélectionnés dans la gamme décrite précédemment, pourront être utilisés dans des installations fonctionnant à plus hautes températures : typiquement jusqu'à une température de fluide caloporteur de 550°C, pour des pressions comprises entre 3bar et 150bar par exemple, et jusqu'à une température de 600°C pour une utilisation à faible pression, proche de la pression atmosphérique, entre 1 et 5 bar.

Ces aciers sont, particulièrement, intéressants en tant que substrat pour la réalisation d'éléments absorbeurs en contact direct avec un fluide caloporteur tel que la vapeur d'eau, caloporteur qui bénéficie d'un retour d'expérience important dans les centrales thermique notamment.

Les éléments absorbeurs, présentés ci-dessus, sont adaptés pour des centrales solaires de tout type, et, plus particulièrement, pour des centrales de type Fresnel et cylindro-paraboliques, nécessitant un traitement sélectif stable sous air, notamment pour des températures supérieures à 400°C. Etant donné les propriétés thermiques de tels aciers et leur plus faible coût d'élaboration que les aciers inoxydables, ces aciers peuvent aussi être utilisés pour la réalisation d'absorbeurs sous la forme d'un faisceau de tubes ayant des longueurs unitaires pouvant aller jusqu'à plusieurs centaines de mètres.

La réalisation d'une centrale solaire thermique à concentration comporte, par exemple, les étapes suivantes :
- fournir un substrat 3 en acier ayant une surface extérieure 2 recouverte par un revêtement sélectif 1 au rayonnement solaire, le substrat 3 étant destiné à former une cavité pouvant être parcourue par un fluide caloporteur ; la forme la plus classique de ce substrat étant notamment le tube cylindrique,
- prévoir au moins un miroir agencé pour concentrer une partie du rayonnement solaire reçu sur le substrat 3.

Le procédé de réalisation d'une centrale solaire thermique à concentration comporte également les étapes suivantes :
- fournir un substrat 3 en acier, ayant une teneur en chrome comprise entre 6% et 12,5% en poids, et de préférence comprise entre 6% et 11,6% en poids, et encore plus préférentiellement comprise entre 6% et 11,5%,
- réaliser un traitement thermique, de manière à former une couche d'oxyde 4 intrinsèquement sélectif au rayonnement solaire à la surface du substrat 3.

Le procédé de réalisation d'une telle surface comporte également une étape de traitement de surface du substrat de manière à obtenir une rugosité de substrat inférieure à 0,5 µm. L'étape de traitement de surface est réalisée avant ou après le traitement thermique.

## Revendications

1. Procédé de réalisation d'un élément absorbeur de rayonnements solaires, pour centrale solaire thermique à concentration, comprenant la formation d'un revêtement sélectif (1) sur une surface extérieure (2) d'un substrat (3) en acier, le revêtement sélectif absorbant au moins 75% du rayonnement solaire et ayant une émissivité inférieure à 25%, **caractérisé en ce que** la formation du revêtement sélectif (1) comporte les étapes successives suivantes :
- fournir un substrat (3) en acier ayant notamment une teneur en chrome comprise entre 6% et 12,5% en poids, une teneur en carbone comprise entre 0,07% et 0,23%, une teneur en manganèse comprise entre 0,2% et 1,3%, une teneur en molybdène comprise entre 0,2% et 2,3%, une teneur en tungstène comprise entre 0% et 2,5%, une teneur en vanadium comprise entre 0% et 0,4% et une teneur en aluminium inférieure ou égale à 0,05% en poids,
- réaliser un traitement thermique à une température comprise entre 400°C et 900°C dans une atmosphère oxydante, contenant au moins 5% d'un précurseur en oxygène choisi dans le groupe constitué par O₂, H₂O et O₃, de manière à former une couche d'oxyde de type (Fe,Cr)₂O₃ (4) à la surface du substrat (3), l'épaisseur de la couche d'oxyde de type (Fe,Cr)₂O₃ (4) étant comprise entre 10nm et 1000nm.

2. Procédé selon la revendication 1, **caractérisé en ce que** l'acier du substrat (3) est choisi parmi les aciers désignés par X11CrMo9-1, X10CrMoVNb9-1, X10CrWMoVNb9-2, X11CrMoWVNb9-1-1, X20CrMoV11-1, X20CrMoV12-1 et X19CrMoNbVN11-1.

3. Procédé selon l'une des revendications 1 et 2, **caractérisé en ce que** l'épaisseur de la couche d'oxyde de type (Fe,Cr)₂O₃ (4) est comprise entre 20nm et 500nm.

4. Procédé selon l'une quelconque des revendications 1 à 3, **caractérisé en ce que** le traitement thermique est réalisé à une température comprise entre 500°C et 800°C.

5. Procédé selon l'une quelconque des revendications 1 à 4, **caractérisé en ce que**, avant l'étape de traitement thermique, un traitement de surface est réalisé sur le substrat (3) de manière à obtenir une rugosité Ra inférieure à 1 µm pour la surface extérieure (2) du substrat (3).

6. Procédé selon la revendication 5, **caractérisé en ce que** la rugosité Ra est comprise entre 0,05µm et 0,5µm.

7. Procédé selon l'une des revendications 5 et 6, **caractérisé en ce que** le traitement de surface est un polissage mécanique, un polissage électrolytique ou un traitement de surface chimique ou **en ce que** le traitement de surface est réalisé par étirage à froid du substrat.

8. Procédé selon l'une des revendications 1 à 7, **caractérisé en ce que** le procédé comporte le dépôt d'une couche anti-reflet (5) sur la couche d'oxyde de type (Fe,Cr)₂O₃ (4) à la surface du substrat (3).

9. Procédé selon la revendication 8, **caractérisé en ce que** la couche anti-reflet (5) est déposée par dépôt par voie chimique en phase vapeur assisté par plasma à pression atmosphérique.

10. Procédé selon l'une quelconque des revendications 8 et 9, **caractérisé en ce que** la couche anti-reflet (5) est en SiO₂, Al₂O₃, TiO₂, ou une combinaison de ces différentes couches.

11. Procédé selon l'une quelconque des revendications 8 à 10, **caractérisé en ce que** la couche anti-reflet (5) a une épaisseur comprise entre 30nm et 250nm.

12. Procédé selon l'une des revendications 1 à 11, **caractérisé en ce que** le substrat (3) a une épaisseur comprise entre 1mm et 8mm.

13. Elément absorbeur de rayonnements solaires pour centrale solaire thermique à concentration, comportant :
- un substrat (3) en acier, présentant une teneur en chrome comprise entre 6% et 12,5%, une teneur en carbone comprise entre 0,07% et 0,23% en poids, une teneur en manganèse comprise entre 0,2% et 1,3% en poids, une teneur en molybdène comprise entre 0,2% et 2,3% en poids, une teneur en tungstène comprise entre 0% et 2,5% en poids, une teneur en vanadium comprise entre 0% et 0,4% en poids, et une teneur en aluminium inférieure ou égale à 0,05% en poids,
- une couche d'oxyde de type (Fe,Cr)₂O₃ (4) à la surface externe du substrat (3), l'épaisseur de la couche d'oxyde de type (Fe,Cr)₂O₃ (4) étant comprise entre 10nm et 1000nm pour former un revêtement sélectif absorbant au moins 75% du rayonnement solaire et ayant une émissivité inférieure à 25%,.

14. Elément absorbeur selon la revendication 13, **caractérisé en ce que** l'épaisseur de la couche d'oxyde de type (Fe,Cr)₂O₃ (4) est comprise entre 20nm et 500nm.

15. Elément absorbeur selon l'une des revendications 13 et 14, **caractérisé en ce que** l'acier du substrat (3) présente une teneur en carbone comprise entre 0,07% et 0,23%.

16. Elément absorbeur selon l'une des revendications 13 à 15, **caractérisé en ce que** l'acier du substrat (3) est choisi parmi les aciers désignés par X11CrMo9-1, X10CrMoVNb9-1, X10CrMoVNb9-2 et X11CrMoWVNb9-1-1, T9, T91, T92, T911, et T122.

17. Elément absorbeur selon l'une des revendications 13 à 16, **caractérisé en ce qu'**une couche anti-reflet (5) est disposée sur la couche d'oxyde de type (Fe,Cr)₂O₃ (4).

18. Elément absorbeur selon l'une des revendications 13 à 17, **caractérisé en ce que** le substrat (3) a une épaisseur comprise entre 1mm et 8mm.

## Patentansprüche

1. Verfahren zur Herstellung eines Elements zur Absorption von Sonnenstrahlung für ein konzentrierendes solarthermisches Kraftwerk, umfassend das Bilden einer selektiven Beschichtung (1) auf einer Außenfläche (2) eines Substrats (3) aus Stahl, wobei die selektive Beschichtung mindestens 75 % der Sonnenstrahlung absorbiert und ein Emissionsvermögen kleiner als 25 % aufweist, **dadurch gekennzeichnet, dass** das Bilden der selektiven Beschichtung (1) die folgenden aufeinanderfolgenden Schritte umfasst:
- Bereitstellen eines Substrats (3) aus Stahl, der insbesondere einen Chromgehalt zwischen 6 und 12,5 Gew.-%, einen Kohlenstoffgehalt zwischen 0,07 und 0,23 %, einen Mangangehalt zwischen 0,2 und 1,3 %, einen Molybdängehalt zwischen 0,2 und 2,3 %, einen Wolframgehalt zwischen 0 und 2,5 %, einen Vanadiumgehalt zwischen 0 und 0,4 % und einen Aluminiumgehalt kleiner oder gleich 0,05 Gew.-% aufweist,
- Durchführen einer Wärmebehandlung bei einer Temperatur zwischen 400 °C und 900 °C in einer oxidierenden Atmosphäre, die mindestens 5 % eines Sauerstoffvorläufers enthält, der aus der Gruppe gewählt ist, die aus 02, H2O und 03 besteht, sodass auf der Oberfläche des Substrats (3) eine Oxidschicht des Typs (Fe,Cr)₂0₃ (4) gebildet wird, wobei die Dicke der Oxidschicht des Typs (Fe,Cr)₂0₃ (4) zwischen 10 nm und 1000 nm liegt.

2. Verfahren nach Anspruch 1, **dadurch gekennzeichnet, dass** der Stahl des Substrats (3) aus den Stählen mit der Bezeichnung X11CrMo9-1, X10CrMoVNb9-1, X10CrWMoVNb9-2, X11CrMoWVNb9-1-1, X20CrMoV11-1, X20CrMoV12-1 und X19CrMoNbVN11-1 gewählt ist.

3. Verfahren nach einem der Ansprüche 1 und 2, **dadurch gekennzeichnet, dass** die Dicke der Oxidschicht des Typs (Fe,Cr)₂0₃ (4) zwischen 20 nm und 500 nm liegt.

4. Verfahren nach einem der Ansprüche 1 bis 3, **dadurch gekennzeichnet, dass** die Wärmebehandlung bei einer Temperatur zwischen 500 °C und 800 °C durchgeführt wird.

5. Verfahren nach einem der Ansprüche 1 bis 4, **dadurch gekennzeichnet, dass** vor dem Wärmebehandlungsschritt eine Oberflächenbehandlung am Substrat (3) durchgeführt wird, um für die Außenfläche (2) des Substrats (3) eine Rauheit Ra kleiner als 1 µm zu erhalten.

6. Verfahren nach Anspruch 5, **dadurch gekennzeichnet, dass** die Rauheit Ra zwischen 0,05 µm und 0,5 µm liegt.

7. Verfahren nach einem der Ansprüche 5 und 6, **dadurch gekennzeichnet, dass** die Oberflächenbehandlung ein mechanisches Polieren, ein elektrolytisches Polieren oder eine chemische Oberflächenbehandlung ist, oder dass die Oberflächenbehandlung durch Kaltziehen des Substrats erfolgt.

8. Verfahren nach einem der Ansprüche 1 bis 7, **dadurch gekennzeichnet, dass** das Verfahren das Abscheiden einer Antireflexionsschicht (5) auf der Oxidschicht des Typs (Fe,Cr)₂0₃(4) auf der Oberfläche des Substrats (3) umfasst.

9. Verfahren nach Anspruch 8, **dadurch gekennzeichnet, dass** die Antireflexionsschicht (5) durch plasmaunterstützte chemische Gasphasenabscheidung bei atmosphärischem Druck abgeschieden wird.

10. Verfahren nach einem der Ansprüche 8 und 9, **dadurch gekennzeichnet, dass** die Antireflexionsschicht (5) aus Si0₂, Al₂O₃, Ti0₂ oder einer Kombination dieser verschiedenen Schichten besteht.

11. Verfahren nach einem der Ansprüche 8 bis 10, **dadurch gekennzeichnet, dass** die Antireflexionsschicht (5) eine Dicke zwischen 30 nm und 250 nm aufweist.

12. Verfahren nach einem der Ansprüche 1 bis 11, **dadurch gekennzeichnet, dass** das Substrat (3) eine Dicke zwischen 1 mm und 8 mm aufweist.

13. Element zur Absorption von Sonnenstrahlung für ein konzentrierendes solarthermisches Kraftwerk, umfassend:
- ein Substrat (3) aus Stahl, der einen Chromgehalt zwischen 6 und 12,5 %, einen Kohlenstoffgehalt zwischen 0,07 und 0,23 Gew.-% , einen Mangangehalt zwischen 0,2 und 1,3 Gew.-%, einen Molybdängehalt zwischen 0,2 und 2,3 Gew.-% , einen Wolframgehalt zwischen 0 und 2,5 Gew.-% einen Vanadiumgehalt zwischen 0 und 0,4 Gew.-% und einen Aluminiumgehalt kleiner oder gleich 0,05 Gew.-% aufweist,
- eine Oxidschicht des Typs (Fe,Cr)₂O₃ (4) auf der Außenfläche des Substrats (3), wobei die Dicke der Oxidschicht des Typs (Fe,Cr)₂O₃ (4) zwischen 10 nm und 1000 nm liegt, um eine selektive Beschichtung zu bilden, die mindestens 75 % der Sonnenstrahlung absorbiert und ein Emissionsvermögen kleiner als 25 % aufweist.

14. Absorptionselement nach Anspruch 13, **dadurch gekennzeichnet, dass** die Dicke der Oxidschicht des Typs (Fe,Cr)₂O₃ (4) zwischen 20 nm und 500 nm liegt.

15. Absorptionselement nach einem der Ansprüche 13 und 14, **dadurch gekennzeichnet, dass** der Stahl des Substrats (3) einen Kohlenstoffgehalt zwischen 0,07 % und 0,23 % aufweist.

16. Absorptionselement nach einem der Ansprüche 13 bis 15, **dadurch gekennzeichnet, dass** der Stahl des Substrats (3) aus den Stählen mit der Bezeichnung X11CrMo9-1, X10CrMoVNb9-1, X10CrMoVNb9-2 und X110MoWVNb9-1-1, T9, T91, T92, T911 und T122 gewählt ist.

17. Absorptionselement nach einem der Ansprüche 13 bis 16, **dadurch gekennzeichnet, dass** auf der Oxidschicht des Typs (Fe,Cr)₂O₃ (4) eine Antireflexionsschicht (5) angeordnet ist.

18. Absorptionselement nach einem der Ansprüche 13 bis 17, **dadurch gekennzeichnet, dass** das Substrat (3) eine Dicke zwischen 1 mm und 8 mm aufweist.

## Claims

1. A method for producing a solar radiation absorber element, for a concentrating thermal solar power plant, comprising the formation of a selective coating (1) on an outer surface (2) of a steel substrate (3), the selective coating absorbing at least 75% of the solar radiation and having an emissivity lower than 25%, **characterized in that** formation of the selective coating (1) comprises the following successive steps:
- providing a steel substrate (3) notably having a chromium content comprised between 6% and 12.5% by weight, a carbon content comprised between 0.07% and 0.23%, a manganese content comprised between 0.2% and 1.3%, a molybdenum content comprised between 0.2% and 2.3%, a tungsten content comprised between 0% and 2.5%, a vanadium content comprised between 0% and 0.4% and an aluminium content less than or equal to 0.05% by weight,
- performing heat treatment at a temperature comprised between 400°C and 900°C in an oxidising atmosphere containing at least 5% of an oxygen precursor chosen among O₂, H₂O and O₃ so as to form an (Fe,Cr)₂O₃ type oxide layer (4) at the surface of the substrate (3), the thickness of the (Fe,Cr)₂O₃ type oxide layer (4) being comprised between 10nm and 1000nm.

2. Method according to claim 1, **characterized in that** the steel of the substrate (3) is chosen from the steels designated by X11CrMo9-1, X10CrMoVNb9-1, X10CrWMoVNb9-2, X11CrMoWVNb9-1-1, X20CrMoV11-1, X20CrMoV12-1 and X19CrMoNbVN11-1.

3. Method according to one of claims 1 and 2, **characterized in that** the thickness of the (Fe,Cr)₂O₃ type oxide layer (4) is comprised between 20nm and 500nm.

4. Method according to any one of claims 1 to 3, **characterized in that** the heat treatment is performed at a temperature comprised between 500°C and 800°C.

5. Method according to any one of claims 1 to 4, **characterized in that**, before the heat treatment step, a surface treatment is performed on the substrate (3) so as to obtain a roughness Ra of less than 1 µm for the outer surface (2) of the substrate (3).

6. Method according to claim 5, **characterized in that** the roughness Ra is comprises between 0,05µm and 0,5µm.

7. Method according to one of claims 5 and 6, **characterized in that** the surface treatment is a mechanical polishing, an electrolytic polishing or a chemical surface treatment or **in that** the surface treatment is performed by cold drawing of the substrate.

8. Method according to one of claims 1 to 7, **characterized in that** the method comprises deposition of an anti-reflective layer (5) on the (Fe,Cr)₂O₃ type oxide layer (4) at the surface of the substrate (3).

9. Method according to claim 8, **characterized in that** the anti-reflective layer (5) is deposited by plasma-enhanced chemical vapour deposition at atmospheric pressure.

10. Method according to any one of claims 8 and 9, **characterized in that** the anti-reflective layer (5) is made from SiO₂, Al₂O₃, TiO₂, or a combination of these different layers.

11. Method according to any one of claims 8 to 10, **characterized in that** the anti-reflective layer (5) has a thickness comprised between 30nm and 250nm.

12. Method according to one of claims 1 to 11, **characterized in that** the substrate (3) has a thickness comprised between 1mm and 8mm.

13. Solar radiation absorber element for a concentrating thermal solar power plant, comprising:
- a steel substrate (3) presenting a chromium content comprised between 6% and 12.5%, a carbon content comprised between 0.07% and 0.23%, a manganese content comprised between 0.2% and 1.3% by weight a molybdenum content comprised between 0.2% and 2.3% by weight, a tungsten content comprised between 0% and 2.5% by weight, a vanadium content comprised between 0% and 0.4% by weight and an aluminium content less than or equal to 0.05% by weight,
- an (Fe,Cr)₂O₃ type oxide layer (4) at the outer surface of the substrate (3), the thickness of the (Fe,Cr)₂O₃ type oxide layer being comprised between 10nm and 1000nm to form a selective coating absorbing at least 75% of the solar radiation and having an emissivity lower than 25%.

14. Absorber element according to claim 13, **characterized in that** the thickness of the (Fe,Cr)₂O₃ type oxide layer (4) is comprised between 20nm and 500nm.

15. Absorber element according to one of claims 13 and 14, **characterized in that** the steel of the substrate (3) presents a carbon content comprised between 0.07% and 0.23%.

16. Absorber element according to one of claims 13 to 15, **characterized in that** the steel of the substrate (3) is chosen from the steels designated by X11 CrMo9-1, X10CrMoVNb9-1, X10CrMoVNb9-2 and X11CrMoWVNb9-1-1, T9, T91, T92, T911, and T122.

17. Absorber element according to one of claims 13 to 16, **characterized in that** an anti-reflective layer (5) is arranged on the oxide layer (4).

18. Absorber element according to one of claims 13 to 17, **characterized in that** the substrate (3) has a thickness comprised between 1mm and 8mm.
